(19) **Europäisches Patentamt European Patent Office Office européen des brevets**

(11) **EP 2 121 402 B1**

(12) **FASCICULE DE BREVET EUROPEEN**

(45) Date de publication et mention de la délivrance du brevet:
**10.02.2016 Bulletin 2016/06**

(21) Numéro de dépôt: **07858607.0**

(22) Date de dépôt: **17.10.2007**

(51) Int Cl.:
**B60W 10/06** *(2006.01)*

(86) Numéro de dépôt international:
**PCT/FR2007/052182**

(87) Numéro de publication internationale:
**WO 2008/078019 (03.07.2008 Gazette 2008/27)**

(54) **PROCEDE DE CONTROLE DU COUPLE MOTEUR D'UN VEHICULE AUTOMOBILE LORS DES PASSAGES DE VITESSES**

VERFAHREN ZUR STEUERUNG DES MOTORDREHMOMENTS EINES KRAFTFAHRZEUGS BEIM GANGWECHSEL

METHOD FOR CONTROLLING THE ENGINE TORQUE OF AN AUTOMOTIVE VEHICLE WHILE CHANGING GEARS

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **22.12.2006 FR 0611240**

(43) Date de publication de la demande:
**25.11.2009 Bulletin 2009/48**

(73) Titulaire: **Renault SAS**
**92100 Boulogne Billancourt (FR)**

(72) Inventeurs:
• **DOLCINI, Pietro**
  **91290 La Norville (FR)**
• **BECHART, Hubert**
  **91240 Saint Michel sur Orge (FR)**
• **CANUDAS DE WIT, Carlos**
  **38330 Saint-Ismier (FR)**

(56) Documents cités:
EP-A- 1 580 463       US-A1- 2005 059 529
US-A1- 2005 130 800   US-B1- 6 440 041

**Description**

L'invention concerne un procédé de contrôle du couple moteur d'un véhicule automobile, pendant les passages de vitesses montants et descendants, dans le cas particulier d'un véhicule équipé d'une boîte de vitesses manuelle.

Le problème que vise à résoudre l'invention est celui du salut et des à-coups du véhicule lors des passages de vitesses, c'est-à-dire des oscillations de la chaîne cinématique dues à la synchronisation entre le moteur du véhicule et l'embrayage.

Actuellement, une solution décrite dans la demande de brevet européen EP 1 655 520, déposée au nom de NISSAN MOTOR COMPANY, consiste à contrôler le couple moteur pour réduire le temps de passage des vitesses dans le cas d'un véhicule automobile équipé d'une boîte de vitesses automatique. L'objectif est une vitesse moteur cible et aucun observateur d'état n'est utilisé.

Une autre solution est décrite dans la demande de brevet international publiée sous le No. WO 2005/108148, au nom de SOUTHWEST RESEARCH INSTITUTE, et concerne les véhicules équipés d'une boîte de vitesses robotisée. Elle concerne le contrôle, pendant toute la phase du passage des vitesses, du couple moteur afin de réduire l'écart de vitesse entre le moteur et la transmission et éviter les oscillations du régime moteur. Le procédé utilise un observateur pour la détermination de l'état, ouvert ou fermé, de l'embrayage, et non de la détermination du couple transmis par l'embrayage.

Le document US2005/0059529 décrit un procédé de contrôle du couple moteur et indique l'état de la technique antérieure.

Le document US-A1-2005/0.130.800 propose un procédé de contrôle du couple transmis par une boîte de vitesses manuel ou automatique. Cependant, ce document ne divulgue pas un procédé de contrôle du couple moteur.

Le but de l'invention est de pallier ces inconvénients en proposant un contrôle du couple moteur dans le cas d'un véhicule à boîte de vitesses manuelle, lors de la fermeture de l'embrayage, en fonction de l'état reconstruit de cet embrayage au moyen d'un observateur d'état à entrée inconnue. Ce contrôle du couple moteur est fait à partir d'une estimation du couple transmis par l'embrayage lors de sa phase d'engagement et présente l'avantage de réduire les à-coups de la vitesse du véhicule lors du passage des vitesses.

L'invention propose un procédé de contrôle du couple qui est fourni par le moteur d'un véhicule, conforme à la partie caractérisante de l'objet de la revendication 1.

Pour cela, l'objet de l'invention est un procédé de contrôle du couple moteur d'un véhicule automobile équipé d'une boîte de vitesses manuelle, caractérisé en ce que, lors des phases d'engagement de l'embrayage au moment des passages de vitesses montants et descendants, le couple moteur est déterminé en fonction d'une estimation du couple transmis par l'embrayage qui est obtenue à partir d'un observateur d'état à entrée inconnue.

Et en ce que au cours des phases d'engagement de l'embrayage, il fixe un seuil minimal à la dérivée temporelle du régime moteur et augmente la valeur du couple moteur pour qu'il soit supérieur ou égal à une borne inférieure, définie par la somme du couple estimé transmis par l'embrayage et du produit de l'inertie du moteur par ledit seuil minimal de la dérivée temporelle du régime du moteur.

Selon une autre caractéristique du procédé, l'estimation du couple transmis par l'embrayage est obtenue à partir d'un observateur d'état à entrée inconnue, avec un modèle de la chaîne cinématique en amont de l'embrayage dont les entrées sont le couple moteur et le couple estimé transmis par l'embrayage, sans tenir compte de la torsion du double volant amortisseur, et un modèle de l'évolution du couple de l'embrayage.

Selon une autre caractéristique du procédé, le modèle de l'évolution du couple estimé transmis par l'embrayage prévoit une évolution linéaire dans le temps, avec une dérivée seconde par rapport au temps qui est nulle.

D'autres caractéristiques et avantages de l'invention apparaîtront à la lecture de la description illustrée par les figures suivantes qui sont :

- la figure 1 : un schéma de principe de la structure d'un observateur du couple transmis par l'embrayage,
- la figure 2 : un modèle de la chaîne cinématique en amont de l'embrayage.

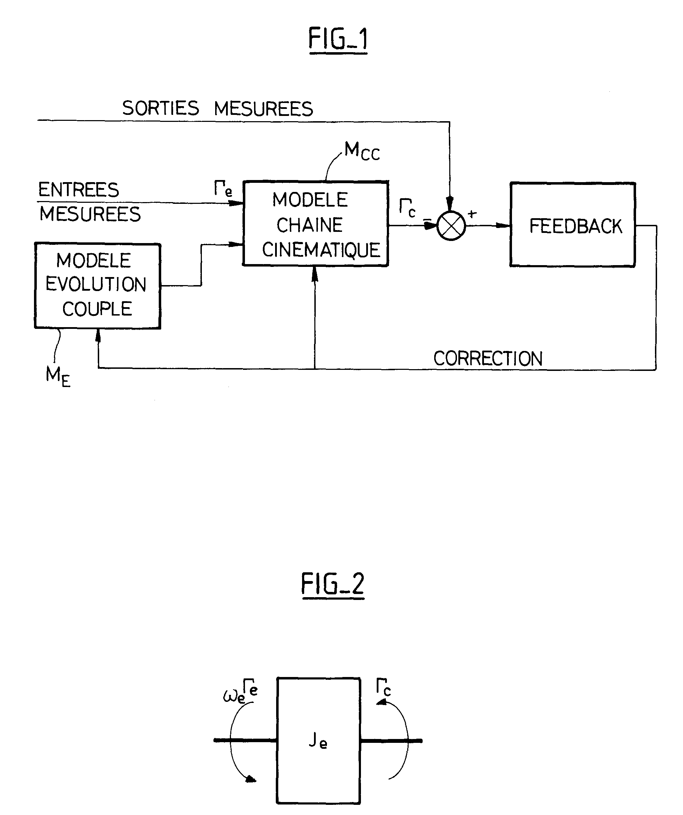

Pour réduire le salut du véhicule et les à-coups lors des passages de vitesses, qu'ils soient montants ou descendants, l'invention consiste à remettre du couple moteur, car celui-ci chute lors de la synchronisation entre le moteur et l'embrayage, de telle sorte qu'il ne devienne pas inférieur à une borne déterminée. Pour cela, il est nécessaire de connaître le couple $\Gamma_c$ transmis par l'embrayage mais sur une boîte de vitesses manuelle, il ne peut être mesuré. C'est pourquoi le procédé selon l'invention le détermine par un observateur à entrée inconnue, formé par le modèle $M_{cc}$ de chaîne cinématique en amont de l'embrayage qui ne prend pas en compte la torsion du double volant amortisseur, et par un modèle $M_E$ de l'évolution de ce couple $\Gamma_c$ estimé comme le montre la figure 1.

La figure 2 est un schéma du modèle de la chaîne cinématique, dans lequel est représentée l'inertie $J_e$ du moteur, la vitesse $\omega_e$ de rotation, ou régime, du moteur, le couple moteur $\Gamma_e$ et le couple $\Gamma_c$ transmis par l'embrayage.

Concernant l'évolution du couple $\Gamma_c$, le procédé considère qu'elle est linéaire, c'est-à-dire avec une dérivée seconde par rapport au temps qui est nulle.

Etant donné qu'au premier ordre, le couple de l'embrayage est indépendant de la vitesse de glissement, donc que l'embrayage est modélisé à partir seulement de la chaîne cinématique en amont, et que la raideur du double volant amortisseur est négligée, la différence entre le couple moteur $\Gamma_e$ et le couple $\Gamma_c$ estimé transmis par l'embrayage est égale au produit de l'inertie du moteur $J_e$ par la dérivée temporelle de rotation $\dot{\omega}_e$ :

$$\Gamma_e - \Gamma_c = J_e * \dot{\omega}_e$$

Puisque l'entrée relative au couple $\Gamma_c$ transmis par l'embrayage n'est pas mesurée mais estimée, l'observateur comprend un modèle $M_E$ de l'évolution de cette entrée et le « feedback » sur l'erreur de prédiction de l'évolution du régime moteur $\omega_e$ permet de corriger l'état interne du modèle du couple $\Gamma_c$ et de faire converger sa sortie avec la vraie valeur du couple embrayage.

La principale contrainte à l'exploitation de l'observateur, de type Luenberger, pour l'estimation du couple $\Gamma_c$ transmis par l'embrayage, pendant les passages de vitesses, est la vitesse de convergence, autrement dit la capacité de l'observateur à suivre les changements rapides de couple. Cette vitesse de convergence de l'observateur est limitée par la mesure du régime moteur $\omega_e$, qui a lieu à chaque passage de cinq dents d'une roue dentée à 60 dents solidaire du vilebrequin devant un capteur inductif dit de point mort haut.

Selon l'invention, le procédé introduit une remise de couple moteur pendant les phases de patinage de l'embrayage, aux passages des vitesses, dans le but de réduire la chute du régime moteur et donc le salut et les à-coups. Réduire la chute du régime moteur revient à fixer un seuil minimal $\dot{\omega}_{emin}$ à sa dérivée temporelle, représentative de sa variation dans le temps qui est négative. De plus, il fixe une borne inférieure au couple moteur $\Gamma_e$ en fonction de l'estimation du couple $\Gamma_c$ transmis par l'embrayage ; effectuée à chaque PMH :

$$\Gamma_e \geq \Gamma_c + J_e * \dot{\omega}_{e\,min} = \Gamma_{e\,min}$$

Grâce à cette borne inférieure $\Gamma_{emin}$ imposée au couple moteur, en phase de patinage de l'embrayage, le salut à la synchronisation entre le moteur et l'embrayage est réduit considérablement et les à-coups sont évités.

Selon une autre caractéristique de l'invention, on peut prévoir que le couple moteur soit contrôlé en imposant à celui-ci un seuil maximal, de façon à limiter, dans certaines situations, le couple transmis aux roues, par rapport à la demande de couple moteur du conducteur.

**Revendications**

1.  Procédé de contrôle du couple moteur d'un véhicule automobile équipé d'une boîte de vitesses manuelle, **caractérisé en ce que**, lors des phases d'engagement de l'embrayage au moment des passages de vitesses montants et descendants, **caractérisé en ce que** le couple moteur ($\Gamma_e$) est déterminé en fonction d'une estimation du couple ($\Gamma_c$) transmis par l'embrayage qui est obtenue à partir d'un observateur d'état à entrée inconnue. et **en ce que**, au cours des phases d'engagement de l'embrayage, il fixe un seuil minimal ($\dot{\omega}_{emin}$) à la dérivée temporelle du régime moteur et augmente la valeur du couple moteur ($\Gamma_e$) pour qu'il soit supérieur ou égal à une borne inférieure, définie par la somme du couple ($\Gamma_c$) estimé transmis par l'embrayage et du produit de l'inertie du moteur ($J_e$) par un seuil minimal de la dérivée temporelle ($\dot{\omega}_{emin}$) du régime du moteur :

$$\Gamma_e \geq \Gamma_c + J_e * \dot{\omega}_{e\,min} = \Gamma_{e\,min}$$

2.  Procédé de contrôle selon la revendication 1, **caractérisé en ce que** l'estimation du couple ($\Gamma_c$) transmis par l'embrayage est obtenue à partir d'un observateur d'état à entrée inconnue, avec un modèle de la chaîne cinématique en amont de l'embrayage dont les entrées sont le couple moteur ($\Gamma_e$) et le couple ($\Gamma_c$) estimé transmis par l'embrayage, sans tenir compte de la torsion du double volant amortisseur, et un modèle de l'évolution du couple ($\Gamma_c$) de l'embrayage.

3.  Procédé de contrôle selon la revendication 1, **caractérisé en ce que** le modèle de l'évolution du couple ($\Gamma_c$) estimé

transmis par l'embrayage prévoit une évolution linéaire dans le temps, avec une dérivée seconde par rapport au temps qui est nulle.

4. Procédé de contrôle selon la revendication 1, **caractérisé en ce que** le couple moteur est contrôlé en imposant à celui-ci un seuil maximal, de façon à limiter, dans certaines situations, le couple transmis aux roues, par rapport à la demande de couple moteur du conducteur.

**Patentansprüche**

1. Verfahren zur Steuerung des Motordrehmoments eines mit einem Handschaltgetriebe ausgestatteten Kraftfahrzeugs, **dadurch gekennzeichnet, dass**, während der Einrückphasen der Kupplung zum Zeitpunkt des Herauf- und Herunterschaltens, **dadurch gekennzeichnet, dass** das Motordrehmoment ($\Gamma_e$) abhängig von einer Schätzung des von der Kupplung übertragenen Drehmoments ($\Gamma_c$) bestimmt wird, die ausgehend von einem Zustandsbeobachter mit unbekanntem Eingang erhalten wird,
und dass es während der Einrückphasen der Kupplung eine Mindestschwelle ($\dot{\omega}_{e\,min}$) für die zeitliche Ableitung der Motordrehzahl festlegt und den Wert des Motordrehmoments ($\Gamma_e$) erhöht, damit es höher als eine oder gleich einer Untergrenze ist, die durch die Summe des von der Kupplung übertragenen Drehmoments ($\Gamma_c$) und des Produkts aus der Trägheit des Motors ($J_e$) und einer Mindestschwelle der zeitlichen Ableitung ($\dot{\omega}_{e\,min}$) der Motordrehzahl definiert wird:

$$\Gamma_e \geq \Gamma_c + J_e \ * \ \dot{\omega}_{e\,min} = \Gamma_{e\,min}$$

2. Steuerverfahren nach Anspruch 1, **dadurch gekennzeichnet, dass** die Schätzung des von der Kupplung übertragenen Drehmoments ($\Gamma_c$) ausgehend von einem Zustandsbeobachter mit unbekanntem Eingang erhalten wird, mit einem Modell der kinematischen Kette vor der Kupplung, deren Eingänge das Motordrehmoment ($\Gamma_e$) und das von der Kupplung übertragene geschätzte Drehmoment ($\Gamma_c$) sind, ohne Berücksichtigung der Torsion des Doppelschwungraddämpfers, und einem Modell der Entwicklung des Drehmoments ($\Gamma_c$) der Kupplung.

3. Steuerverfahren nach Anspruch 1, **dadurch gekennzeichnet, dass** das Modell der Entwicklung des von der Kupplung übertragenen geschätzten Drehmoments ($\Gamma_c$) eine lineare zeitliche Entwicklung vorhersieht, mit einer zweiten Ableitung bezüglich der Zeit, die Null ist.

4. Steuerverfahren nach Anspruch 1, **dadurch gekennzeichnet, dass** das Motordrehmoment gesteuert wird, indem ihm eine maximale Schwelle auferlegt wird, um in bestimmten Situationen das an die Räder übertragene Drehmoment bezüglich der Motordrehmomentanforderung des Fahrers zu begrenzen.

**Claims**

1. Method for controlling the engine torque of a motor vehicle fitted with a manual gearbox, **characterized in that**, during phases of engaging the clutch during upshift and downshift gear changes, **characterized in that** the engine torque ($\Gamma_e$) is determined as a function of an estimate of the torque ($\Gamma_c$) transmitted by the clutch, which estimate is obtained from an unknown-input state observer
and **in that**, during phases of clutch engagement, it sets a minimum threshold ($\dot{\omega}_{emin}$) for the derivative of engine speed with respect to time and increases the value of the engine torque ($\Gamma_e$) so that it is above or equal to a lower end point, defined by the sum of the estimated torque ($\Gamma_c$) transmitted by the clutch and the product of the inertia of the engine ($J_e$) times a minimum threshold ($\dot{\omega}_{emin}$) for the derivative of engine speed with respect to time:

$$\Gamma_e \geq \Gamma_c + J_e * \dot{\omega}_{e\,min} = \Gamma_{e\,min}$$

2. Control method according to Claim 1, **characterized in that** the estimate of the torque ($\Gamma_c$) transmitted by the clutch is obtained from an unknown-input state observer with a model of the drivetrain upstream of the clutch the inputs of which are the engine torque ($\Gamma_e$) and the estimated torque ($\Gamma_c$) transmitted by the clutch, disregarding the torsion of the dual-mass flywheel, and a model of how the torque ($\Gamma_c$) of the clutch changes.

3. Control method according to Claim 1, **characterized in that** the model of how the estimated torque ($\Gamma_c$) transmitted by the clutch changes anticipates a linear change with respect to time, with a second derivative with respect to time that is equal to zero.

4. Control method according to Claim 1, **characterized in that** the engine torque is controlled by imposing on it a maximum threshold so as to limit, in certain situations, the torque transmitted to the wheels, with respect to the demand for engine torque from the driver.

## FIG_1

SORTIES MESUREES

ENTREES
MESUREES

$\Gamma_e$

$M_{CC}$

MODELE
CHAINE
CINEMATIQUE

$\Gamma_c$

FEEDBACK

MODELE
EVOLUTION
COUPLE

$M_E$

CORRECTION

## FIG_2

$\omega_e$ $\Gamma_e$

$\Gamma_c$

$J_e$

## RÉFÉRENCES CITÉES DANS LA DESCRIPTION

**Documents brevets cités dans la description**

- EP 1655520 A
- WO 2005108148 A
- US 20050059529 A
- US 20050130800 A1